# EUROPÄISCHE PATENTSCHRIFT

(11) **EP 0 730 115 B1**
(45) Veröffentlichungstag und Bekanntmachung des Hinweises auf die Patenterteilung: **03.06.1998**
(21) Anmeldenummer: 96100449.6
(22) Anmeldetag: 13.01.1996
(51) Int. Cl.: F16L 11/127

(54) **Mehrschichtrohr mit elektrisch leitfähiger Innenschicht**
Multilayer tube having an electrically conductive inner layer
Tube multicouche comprenant une couche interne électroconductrice

(30) Priorität: 01.03.1995 DE 19507025
(43) Veröffentlichungstag der Anmeldung: 04.09.1996
(73) Patentinhaber: HÜLS AKTIENGESELLSCHAFT, 45764 Marl (DE)
(72) Erfinder: Jadamus, Hans, Dr., D-45768 Marl (DE); Ries, Hans, Dr., D-45772 Marl (DE); Röber, Stefan, Dr., D-22453 Hamburg (DE)

(56) Entgegenhaltungen:
- EP-A- 0 470 606
- EP-A- 0 582 301
- EP-A- 0 582 302
- WO-A-93/21466
- WO-A-94/09303
- WO-A-95/30105
- BE-A- 632 328
- DE-B- 1 283 615
- DE-B- 2 420 753
- GB-A- 2 018 780
- GB-A- 2 211 266
- US-A- 4 303 457

## Beschreibung

Gegenstand der vorliegenden Erfindung ist ein Mehrschichtrohr, dessen Innenschicht durch Zusatz von Graphit-Fibrillen dauerantistatisch ausgerüstet ist.

Mehrschichtrohre auf Basis von Polyamiden sind bekannt (DE-OSS 41 12 662, 41 12 668, 41 37 430, 41 37 431, 41 37 434, 42 07 125, 42 14 383, 42 15 608, 42 15 609, 42 40 658, 43 02 628, 43 10 884, 43 26 130, die nicht vorveröffentlichten deutschen Patentanmeldungen P 43 36 289.3, P 43 36 290.7, P 43 36 291.5 und P 44 10 148.1 sowie WO-A-93/21466, EP-A-0 198 728 und EP-A-0 558 373). Stand der Technik ist, daß die Innenschicht durch Zusatz von Ruß oder Kohlenstoffasern leitfähig ausgerüstet werden kann (siehe hierzu auch DE-OS 40 25 301).

Die Verwendung derart leitfähig eingestellter Innenschichten ist jedoch mit einer Reihe von Nachteilen verbunden:
a) Sie sind nur ungenügend beständig gegen peroxidhaltige Kraftstoffe (sour gas). Dies äußert sich zum Beispiel darin, daß nach Lagerung in sour-gas-haltigen Kraftstoffen (z. B. nach der Ford-Spezifikation FLTM AZ 105-01, PN 180 oder nach der GM-Spezifikation GM213M, PN 50) bereits nach relativ kurzer Zeit eine gravierende Verschlechterung der Kälteschlagzähigkeit auftritt.
b) Nach Knicken, Thermoformen oder nach längerem Kontakt mit Kraftstoff weisen die Schichten starke Einbußen in der Leitfähigkeit auf, die bis zum vollständigen Verlust führen kann.
c) Die Oberflächenrauhigkeit führt an Verbindungen mit üblichen Anschlußelementen (Quick-Connectoren) zu Leckagen.
d) Durch die hohe Ruß- oder Faserbeladung der Formmassen ergibt sich bei der Extrusion ein hoher Druckaufbau. Dies bedingt eine Absenkung der Produktionsgeschwindigkeit auf unwirtschaftlich niedrige Werte.
e) Die Verwendung von Kohlenstoffasern bewirkt eine unerwünschte Zunahme der Biegesteifigkeit.
f) Schließlich wird bei den üblichen Zugabemengen an Ruß die Kälteschlagzähigkeit auf unerwünschte Weise verringert.

Es stellte sich daher die Aufgabe, Mehrschichtrohre mit elektrisch leitfähiger Innenschicht herzustellen, bei denen diese Nachteile vermieden werden.

Diese Aufgabe wird durch ein Mehrschichtrohr gelöst, das folgende Schichten enthält:
I. Außenschicht bestehend aus einer thermoplastischen Formmasse und
II. Innenschicht bestehend aus einer elektrisch leitfähigen thermoplastischen Formmasse,
dadurch gekennzeichnet, daß die elektrisch leitfähige Formmasse Graphit-Fibrillen enthält.

Darüber hinaus können noch weitere Schichten enthalten sein, beispielsweise eine Sperrschicht für Kraftstoffkomponenten, wie sie dem Stand der Technik (siehe die vorgenannten Patentanmeldungen) entspricht, als Zwischenschicht. Die Sperrschicht kann gegebenenfalls mittels eines Haftvermittlers mit den benachbarten Schichten adhäsiv verbunden werden.

Die Außenschicht kann beispielsweise aus einer Polyamid-Formmasse oder aus einer Polyolefin-Formmasse bestehen. Weitere geeignete Werkstoffe für die Außenschicht sind Formmassen aus thermoplastischen Polyestern oder Polyesterelastomeren. Als Innenschicht geeignet sind beispielsweise Formmassen auf Basis von Polyamid, Polyolefinen, thermoplastischen Polyestern oder Fluorpolymeren.

Als Polyamid kommen hierbei in erster Linie aliphatische Homo- und Copolyamide in Frage. Als Beispiel seien die 4.6-, 6.6-, 6.12-, 8.10-, 10.10-Polyamide o. ä. genannt. Bevorzugt werden 6-, 10.12-, 11-, 12- sowie 12.12-Polyamide. [Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer α, ω-Aminocarbonsäure bzw. von dem davon abgeleiteten Lactam ausgegangen worden ist - H. Domininghaus, **Die Kunststoffe und ihre Eigenschaften**, Seite 272, VDI-Verlag (1976).]

Sofern Copolyamide verwendet werden, können diese z. B. Adipinsäure, Sebacinsäure, Korksäure, Isophthalsäure oder Terephthalsäure als Cosäure bzw. Bis(4-aminocyclohexyl)methan, Trimethylhexamethylendiamin, Hexamethylendiamin o. ä. als Codiamin enthalten.

Die Herstellung dieser Polyamide ist bekannt (z. B.: D. B. Jacobs, J. Zimmermann, **Polymerization Processes**, S. 424 - 467; Interscience Publishers, New York (1977); DE-AS 21 52 194).

Ebenfalls geeignet als Polyamide sind gemischt aliphatisch/aromatische Polykondensate, wie sie z. B. in den US-PSS 2 071 250, 2 071 251, 2 130 523, 2 130 948, 2 241 322, 2 312 966, 2 512 606, 3 393 210 bzw. in Kirk-Othmer; **Encyclopedia of Chemical Technology**, 3. Aufl., Vol. 18, Wiley & Sons (1982), S. 328 und 435, beschrieben werden. Weitere als Polyamide geeignete Polykondensate sind Poly(etheresteramide) bzw. Poly(etheramide). Derartige Produkte werden z. B. in den DE-OSS 27 12 987, 25 23 991 und 30 06 961 beschrieben.

Das Molekulargewicht (Zahlenmittel) der Polyamide liegt oberhalb von 4 000, vorzugsweise oberhalb von 10 000. Bevorzugt liegt hierbei die relative Viskosität (ηᵣₑₗ) im Bereich von 1,65 bis 2,4.

Die Polyamide können bis zu 40 Gew.-% andere Thermoplaste enthalten, sofern diese die erfindungsgemäßen Eigenschaften nicht stören. Insbesondere seien hier Polycarbonat [H. Schnell, **Chemistry and Physics of Polycarbonates**, Interscience Publishers, New York (1981)], Acrylnitril/Styrol/Butadien- [Houben-Weyl, **Methoden der organischen Chemie**, Bd. 14/1, Georg Thieme Verlag Stuttgart, S. 393 - 406; **Ullmanns Encyclopädie der technischen Chemie**, 4. Auflage, Bd. 19, Verlag Chemie Weinheim (1981), S. 279 - 284], Acrylnitril/Styrol/Acrylat- **[Ullmanns Encyclopädie der technischen Chemie,** 4. Auflage, Bd. 19, Verlag Chemie Weinheim (1981), S. 277 - 295], Acrylnitril/Styrol-Copolymersate **[Ullmanns Encyclopädie der technischen Chemie,** 4. Auflage, Bd. 19, Verlag Chemie Weinheim (1981), S. 273 ff.] oder Polyphenylenether (DE-OSS 32 24 691 und 32 24 692, US-PSS 3 306 874, 3 306 875 u. 4 028 341) genannt.

Sofern erforderlich, können die Polyamide schlagzäh eingestellt werden. Geeignete Modifier sind z. B. Ethylen/Propylen- oder Ethylen/Propylen/Dien-Copolymere (EP-A-0 295 076), Polypentenylen, Polyoctenylen oder statistische bzw. blockartig aufgebaute Copolymere aus alkenylaromatischen Verbindungen mit aliphatischen Olefinen oder Dienen (EP-A-0 261 748). Weiterhin können als schlagzähmachende Kautschuke Kern/Schale-Kautschuke mit einem zähelastischen Kern aus (Meth)Acrylat-, Butadien- oder Styrol/Butadien-Kautschuk mit Glastemperaturen T_{g} < -10 °C verwendet werden, wobei der Kern vernetzt sein kann. Die Schale kann aus Styrol und/oder Methylmethacrylat und/oder weiteren ungesättigten Monomeren aufgebaut sein (DE-OSS 21 44 528, 37 28 685). Der Anteil an schlagzähmachender Komponente ist so zu wählen, daß die gewünschten Eigenschaften nicht verschlechtert werden.

Die genannten Polyamide werden für sich oder in Gemischen eingesetzt.

Als Polyolefin kommen Homopolymere und Copolymere von α-Olefinen mit 2 bis 12 C-Atomen infrage, beispielsweise von Ethylen, Propen, 1-Buten, 1-Hexen oder 1-Octen. Weiterhin geeignet sind Copolymere und Terpolymere, die zusätzlich zu diesen Monomeren weitere Monomere, insbesondere Diene, enthalten, wie beispielsweise Ethylidennorbornen, Cyclopentadien oder Butadien.

Bevorzugte Polyolefine sind Polyethylen und Polypropylen. Grundsätzlich kann hiervon jeder handelsübliche Typ eingesetzt werden. So kommen beispielsweise infrage: lineares Polyethylen hoher, mittlerer oder niedriger Dichte, LDPE, Ethylencopolymere mit kleineren Mengen (bis maximal ca. 40 Gew.-%) an Comonomeren wie n-Butylacrylat, Methylmethacrylat, Maleinsäureanhydrid, Styrol, Vinylalkohol, Acrylsäure, Glycidylmethacrylat o. ä., isotaktisches oder ataktisches Homopolypropylen, Randomcopolymere von Propen mit Ethen und/oder 1-Buten, Ethylen-Propylen-Blockcopolymere und dergleichen mehr. Derartige Polyolefine können auch eine Schlagzähkomponente wie z. B. EPM- oder EPDM-Kautschuk oder SEBS enthalten. Darüber hinaus können sie auch, dem Stand der Technik entsprechend, funktionelle Monomere wie Maleinsäureanhydrid, Acrylsäure oder Vinyltrimethoxysilan aufgepfropft enthalten.

Die thermoplastischen Polyester weisen nachstehende Grundstruktur auf: 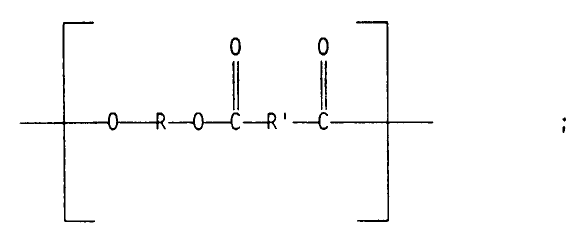 dabei stellt R einen divalenten verzweigten oder nichtverzweigten aliphatischen und/oder cycloaliphatischen Rest mit 2 bis 12, vorzugsweise 2 bis 8 C-Atomen, in der Kohlenstoffkette und R' einen divalenten aromatischen Rest mit 6 bis 20, vorzugsweise 8 bis 12, C-Atomen im Kohlenstoffgerüst dar.

Als Beispiele für die bei der Herstellung einzusetzenden Diole seien Ethylenglykol, Trimethylenglykol, Tetramethylenglykol, Hexamethylenglykol, Neopentylglykol, Cyclohexandimethanol o. ä. genannt.

Bis zu 25 Mol-% des genannten Diols können durch ein Diol mit nachstehender allgemeiner Formel 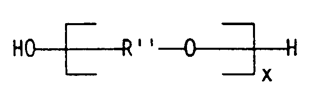 ersetzt sein, wobei R'' einen zweiwertigen Rest mit 2 bis 4 C-Atomen bedeutet und x einen Wert von 2 bis 50 annehmen kann.

Bevorzugt als Diole werden Ethylenglykol und Tetramethylenglykol eingesetzt.

Als bei der Herstellung einzusetzende aromatische Dicarbonsäure kommen z. B. Terephthalsäure, Isophthalsäure, 1.4-, 1.5-, 2.6- bzw. 2.7-Naphthalindicarbonsäure, Diphensäure, Diphenylether-4.4'-dicarbonsäure oder deren polyesterbildende Derivate, wie z. B. Dimethylester, in Frage.

Bis zu 20 Mol-% dieser Dicarbonsäuren können durch aliphatische Dicarbonsäuren, wie z. B. Bernsteinsäure, Maleinsäure, Fumarsäure, Sebacinsäure, Dodecandisäure u. a. ersetzt sein.

Die Herstellung der thermoplastischen Polyester gehört zum Stand der Technik (DE-OSS 24 07 155, 24 07 156; Ullmanns Encyclopädie der technischen Chemie, 4. Auflage, Band 19, Seite 65 ff, Verlag Chemie GmbH, Weinheim 1980).

Die erfindungsgemäß eingesetzten Polyester weisen eine Viskositätszahl (J-Wert) im Bereich von 80 bis 240 cm³/g auf.

Bevorzugte thermoplastische Polyester sind Polyethylenterephthalat und Polybutylenterephthalat.

Sofern erforderlich, können die Polyester schlagzäh eingestellt werden.

Als Fluorpolymere sind beispielsweise Ethylen-Tetrafluorethylen-Copolymere (ETFE; z. B. Tefzel 200 von DuPont oder Hostaflon ET 6235 von Hoechst), Tetrafluorethylen-Hexafluorpropen-Vinylidenfluorid-Terpolymere (THV; z. B. Hostaflon TFB von Hoechst), Ethylen-Chlortrifluorethylen-Copolymere (ECTFE; z. B. Halar von Ausimont) oder Polyvinylidenfluorid (PVDF) geeignet. Diese Polymeren können Weichmacher enthalten; die verwendung von weichmacherfreien Fluorpolymeren ist jedoch bevorzugt.

ETFE, THV und ECTFE sind beispielsweise in H. Domininghaus, **Die Kunststoffe und ihre Eigenschaften**, 4. Auflage, Kapitel 2.1.7 (Fluor-Kunststoffe) beschrieben.

Herstellung und Struktur von Polyvinylidenfluorid sind ebenfalls bekannt (Hans R. Kricheldorf, **Handbook of Polymer Synthesis**, Part A, Verlag Marcel Dekker Inc. New York - Basel - Hongkong, S. 191 f.: **Kunststoff-Handbuch**, **1**. Auflage, Band XI, Carl Hanser Verlag München (1971), S. 403 ff.).

Es können erfindungsgemäß auch Polymere auf Basis von Polyvinylidenfluorid enthalten sein, die bis zu 40 Gew.-% andere Monomere aufweisen. Als solche zusätzlichen Monomeren seien beispielsweise genannt: Trifluorethylen, Ethylen, Propen und Hexafluorpropen.

Das erfindungsgemäß eingesetzte Polyvinylidenfluorid weist in der Regel einen Melt Flow-Index von < 17 g/10 min., vorzugsweise von 2 bis 13 g/10 min. (DIN 53 735) auf, gemessen bei 230 °C und unter einer Belastung von 5 kg.

Graphit-Fibrillen sind bekannt. Sie werden beispielsweise in Plastics World, November 1993, Seite 10 f beschrieben. Es handelt sich um winzige Fasern aus kristallinem Graphit. Beim derzeit kommerziell erhältlichen Material liegt ihr durchschnittlicher Durchmesser in der Größenordnung um 0,01 micron mit einem L/D-Verhältnis in der Größenordnung um 500 : 1 bis 1 000 : 1. Grundsätzlich geeignet für den Zweck der vorliegenden Erfindung sind auch Graphitfibrillen, wie sie in den WO-Anmeldungen Nr. 8603455, 8707559, 8907163, 9007023 und 9014221 sowie in JP-A-03287821 beschrieben sind.

Der Gehalt an Graphitfibrillen in der Innenschicht beträgt in der Regel 1 bis 30 Gew.-%, vorzugsweise 1,5 bis 10 Gew.-% und besonders bevorzugt 2 bis 7 Gew.-%.

Die gegebenenfalls vorhandene Sperrschicht für Kraftstoffkomponenten kann im Rahmen der Erfindung beliebig gewählt werden. Sie kann beispielsweise aus einer Formmasse auf Basis von thermoplastischem Polyester, Polyvinylidenfluorid (PVDF), ETFE, THV, Polyolefinen oder Ethylen/Vinylalkohol-Copolymer (EVOH) bestehen. Hinsichtlich geeigneter Ausführungen sei auf die in der Beschreibungseinleitung genannten Patentanmeldungen verwiesen.

Als thermoplastischer Polyester wird hierbei bevorzugt Polybutylenterephthalat verwendet.

Die erfindungsgemäßen Rohre werden vorzugsweise durch Coextrusion hergestellt. Die Herstellung von Mehrschichtrohren durch Coextrusion ist Stand der Technik.

Die Dicke der Innenschicht wird so gewählt, daß einerseits ein gebildetes elektrisches Potential zuverlässig abgeleitet werden kann, andererseits aber aus Kostengründen möglichst wenig Material benötigt wird. Die Innenschicht kann hierbei sehr dünn sein, beispielsweise zwischen 0,01 und 0,1 mm. Für bestimmte Einsatzzwecke können jedoch auch Dicken von 0,2 bis 0,3 mm vorteilhaft sein. Im allgemeinen verhält sich die Dicke der Innenschicht zur Dicke der Außenschicht bzw. zur Summe der Dicken der übrigen Schichten wie 1 : 5 bis 1 : 100.

Die erfindungsgemäßen Rohre weisen eine gute sour-gas-Beständigkeit auf und erfüllen beispielsweise die Ansprüche der Ford-Spezifikation WSL-M 98 D 33 A4 gegenüber Kraftstoff nach Ford FLTM AZ 105-01 bzw. PN180 sowie der GM-Spezifikation GM213M gegenüber PN50.

Sie verhindern darüber hinaus wirkungsvoll den Aufbau hoher Spannungen und erfüllen beispielsweise die GM-Spezifikation GM213M (Entwurf April 1993), Punkt 4.19. Ihr Oberflächenwiderstand ist bevorzugt kleiner als 10⁶ Ω/sq. Dies gilt auch nach mehrfachem Knicken und nach Kraftstofflagerung.

Bevorzugt eingesetzt werden die erfindungsgemäßen Kunststoffrohre zum Transport (petro)chemischer Stoffe bzw. im Kraftfahrzeugsektor zum Durchleiten von Brems-, Kühl- und Hydraulikflüssigkeiten sowie Kraftstoff, insbesondere auch methanol- oder ethanolhaltigem Kraftstoff. Eine weitere Verwendung der mehrschichtigen Rohre besteht darin, daß aus ihnen Hohlkörper wie Tankbehälter oder Einfüllstutzen, insbesondere für den Kraftfahrzeugsektor, hergestellt werden. Die Herstellung dieser Hohlkörper erfolgt beispielsweise durch einen der Coextrusion nachgeschalteten Blasformprozeß.

Weiterhin können die erfindungsgemäßen Kunststoffrohre als Förderleitung für Feststoffe verwendet werden. Gerade brennbare, pulverige bzw. staubförmige Feststoffe wie z. B. Mehl müssen in antistatisch ausgerüsteten Leitungen gefördert werden, um Staubexplosionen zu vermeiden.

Im folgenden soll die Erfindung beispielhaft erläutert werden. Mit Buchstaben gekennzeichnete Beispiele sind nicht erfindungsgemäß. Alle Prozentangaben bedeuten Gewichtsprozent.

### Beispiele

### Eingesetzte Materialien:

- PA 1:: Polyamid 12 (ηᵣₑₗ : 2,1; weichmacherhaltig, schlagzähmodifiziert; 60 mmol/kg Aminoendgruppen; 10 mmol/kg Carboxylendgruppen; VESTAMID® X 7297 der HÜLS AG).
- PA 2:: Polyamid 12 (ηᵣₑₗ : 2,1; weichmacherhaltig, schlagzähmodifiziert; 15 mmol/kg Aminoendgruppen; 40 mmol/kg Carboxylendgruppen; VESTAMID® X 7293 der HÜLS AG).
- PES 1:: Entsprechend DE-A-42 40 658 modifiziertes VESTODUR® 1000 der HÜLS AG (Homopolybutylenterephthalat).
- PVDF 1:: Polyvinylidenfluorid (Melt Flow-Index 13 g/10 min.; DYFLOR® LE der HÜLS AG).
- PVDF 2:: Entsprechend DE-A-43 26 130 modifiziertes PVDF 1.
- GF 1:: Graphitfibrillen der Firma Hyperion Catalysis International, Typ BN.
- GF 2:: Graphitfibrillen der Firma Hyperion Catalysis International, Typ CC.
- Leitruß:: KETJENBLACK EC 300 J der Akzo Chemie.

Die Herstellung der Mischungen erfolgte in einem Zweischneckenkneter bei einer Massetemperatur von 260 °C.

Die Rohre wurden auf einer Laborextrusionsanlage mit einem Fünfschichtwerkzeug hergestellt (bei der Herstellung der Zwei-, Drei- und Vierschichtrohre bleiben die nicht benötigten Kanäle geschlossen).

Es wurden Rohre mit 8 mm Außendurchmesser und einer Gesamtwandstärke von 1 mm hergestellt.

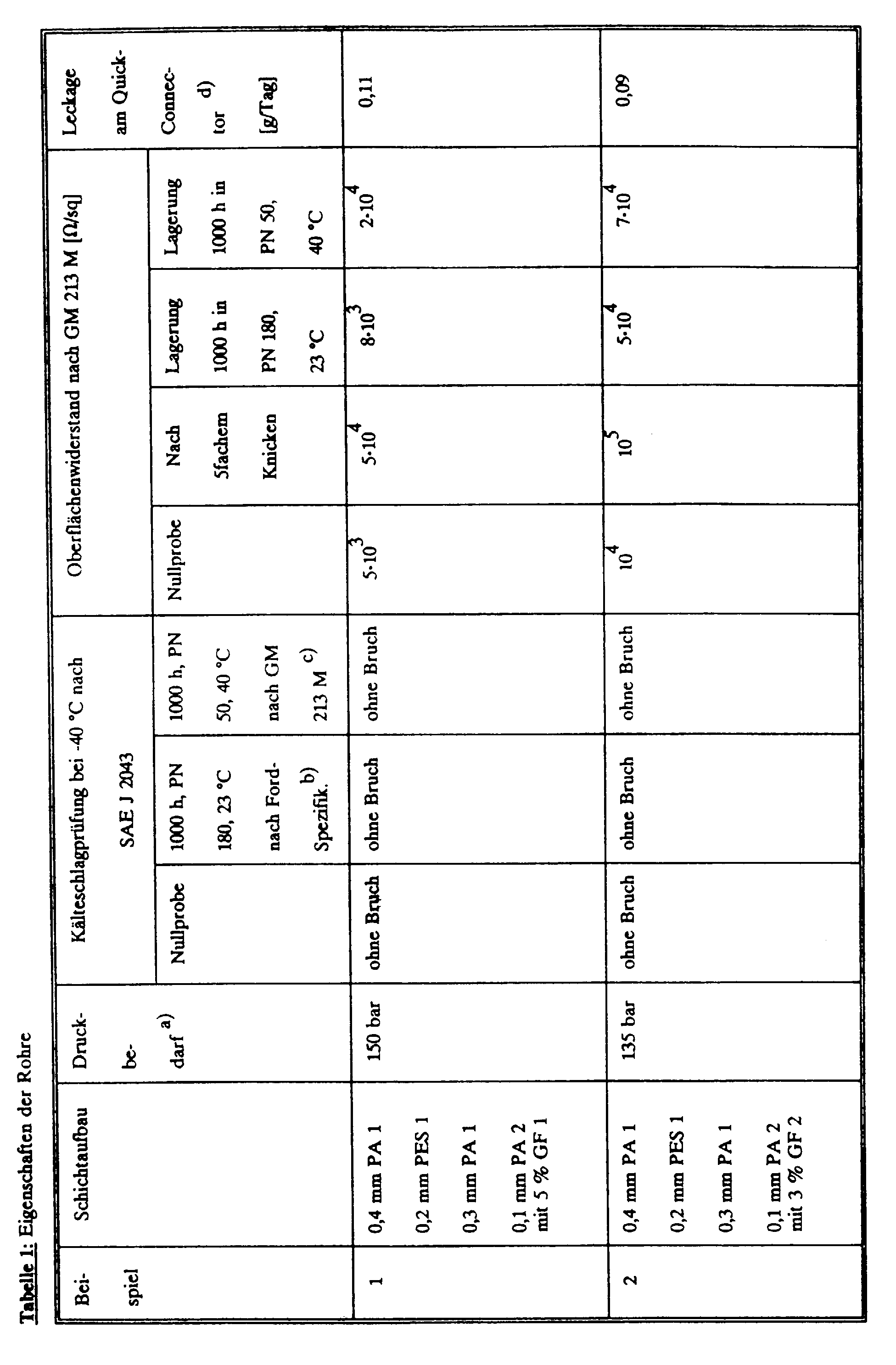

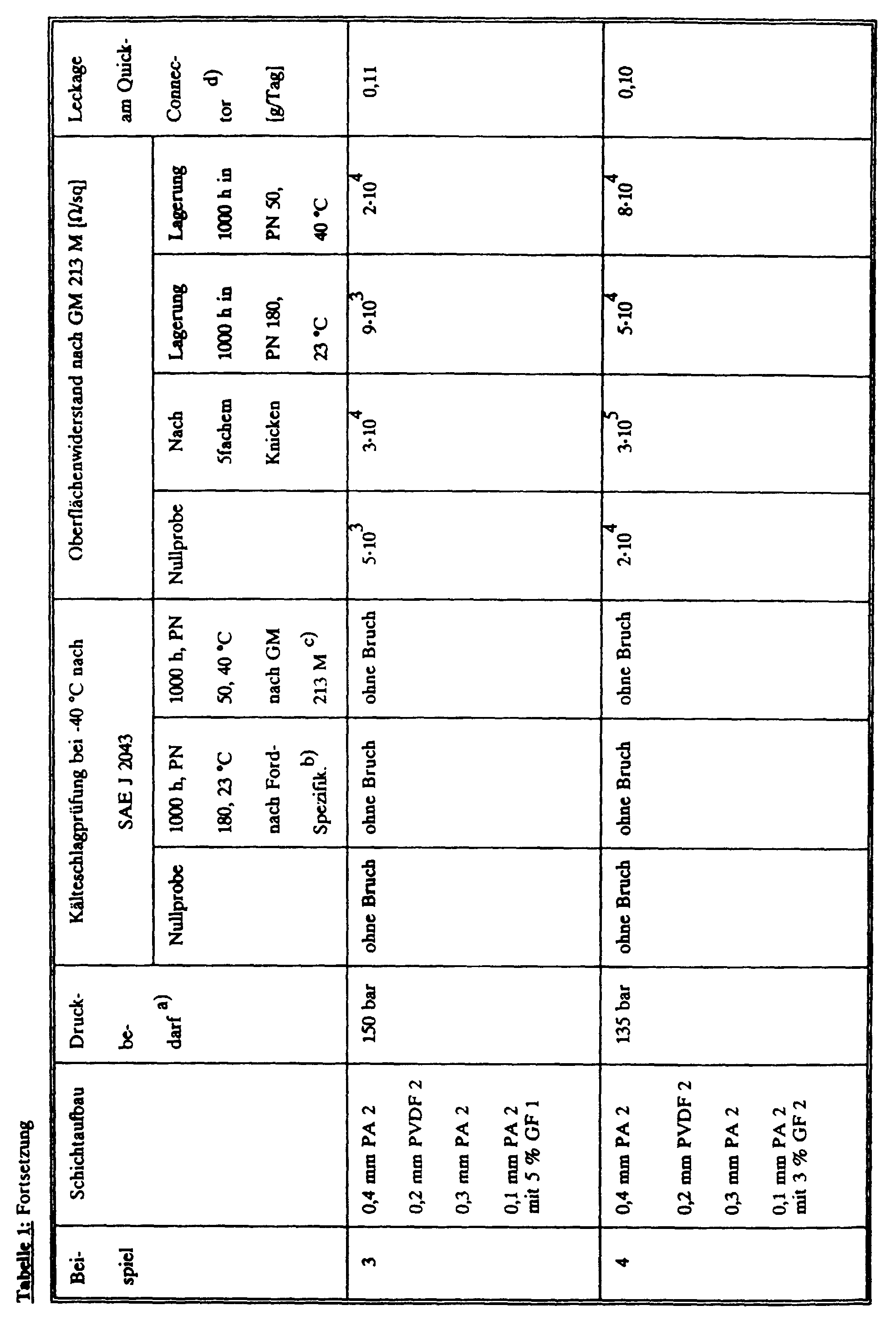

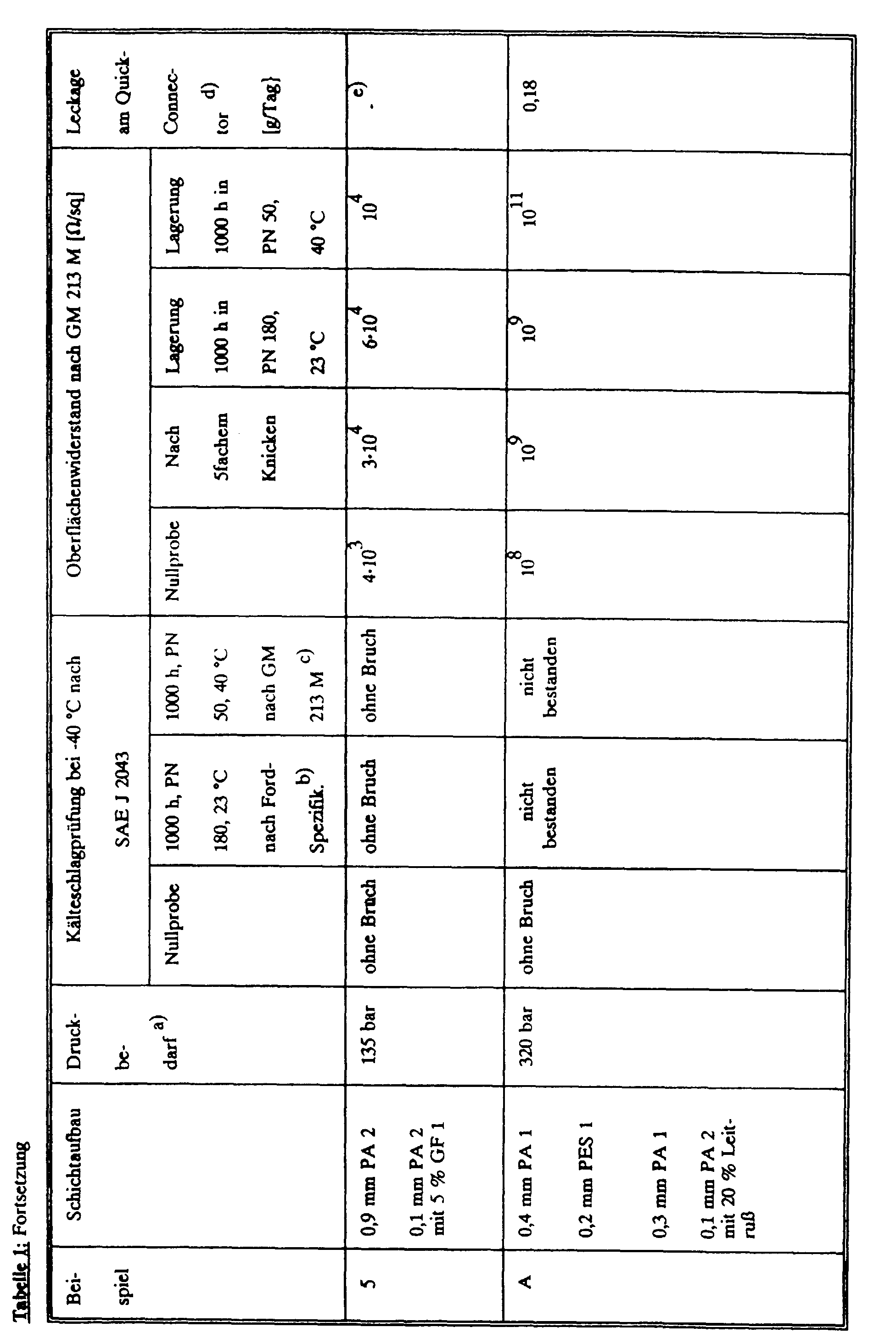

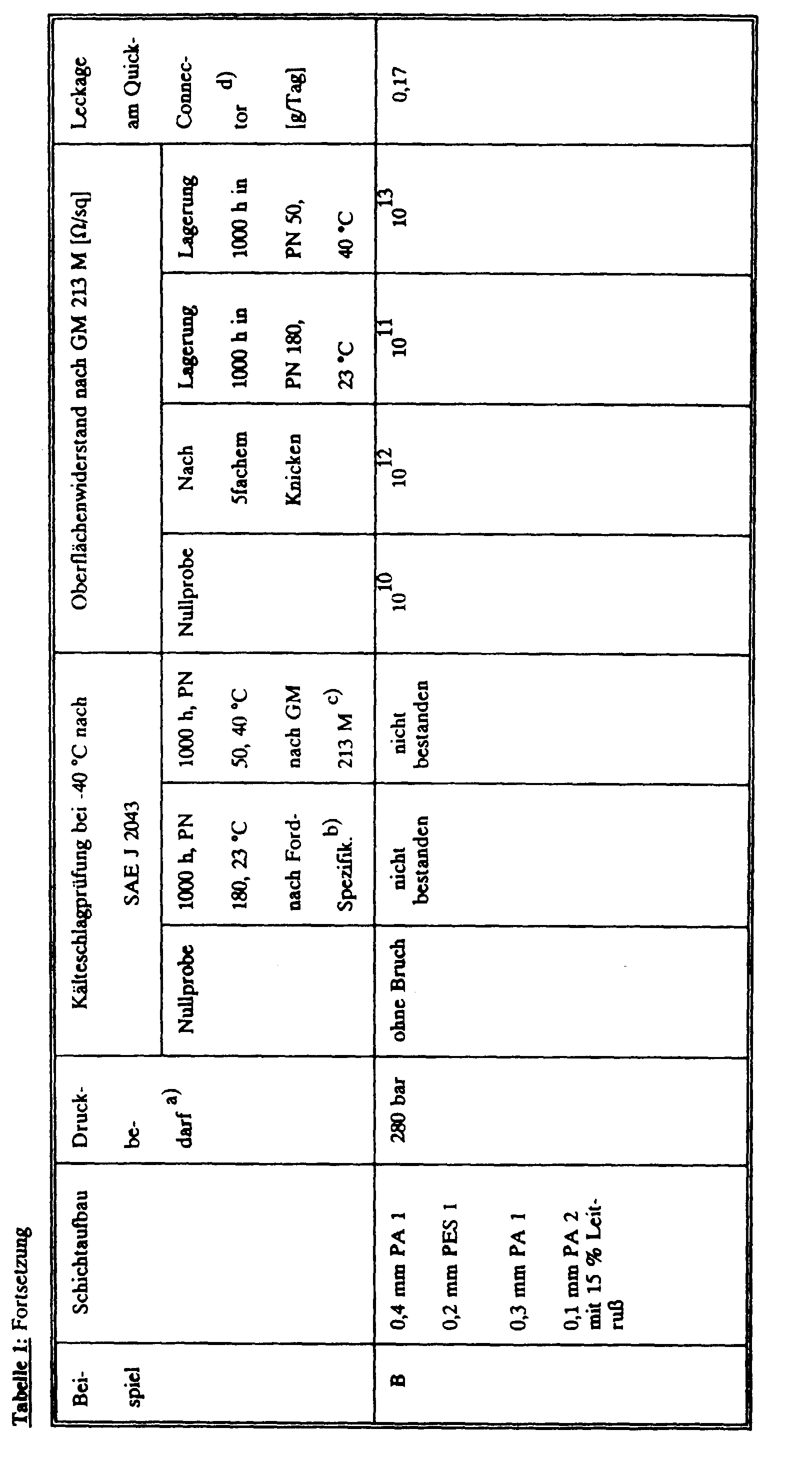

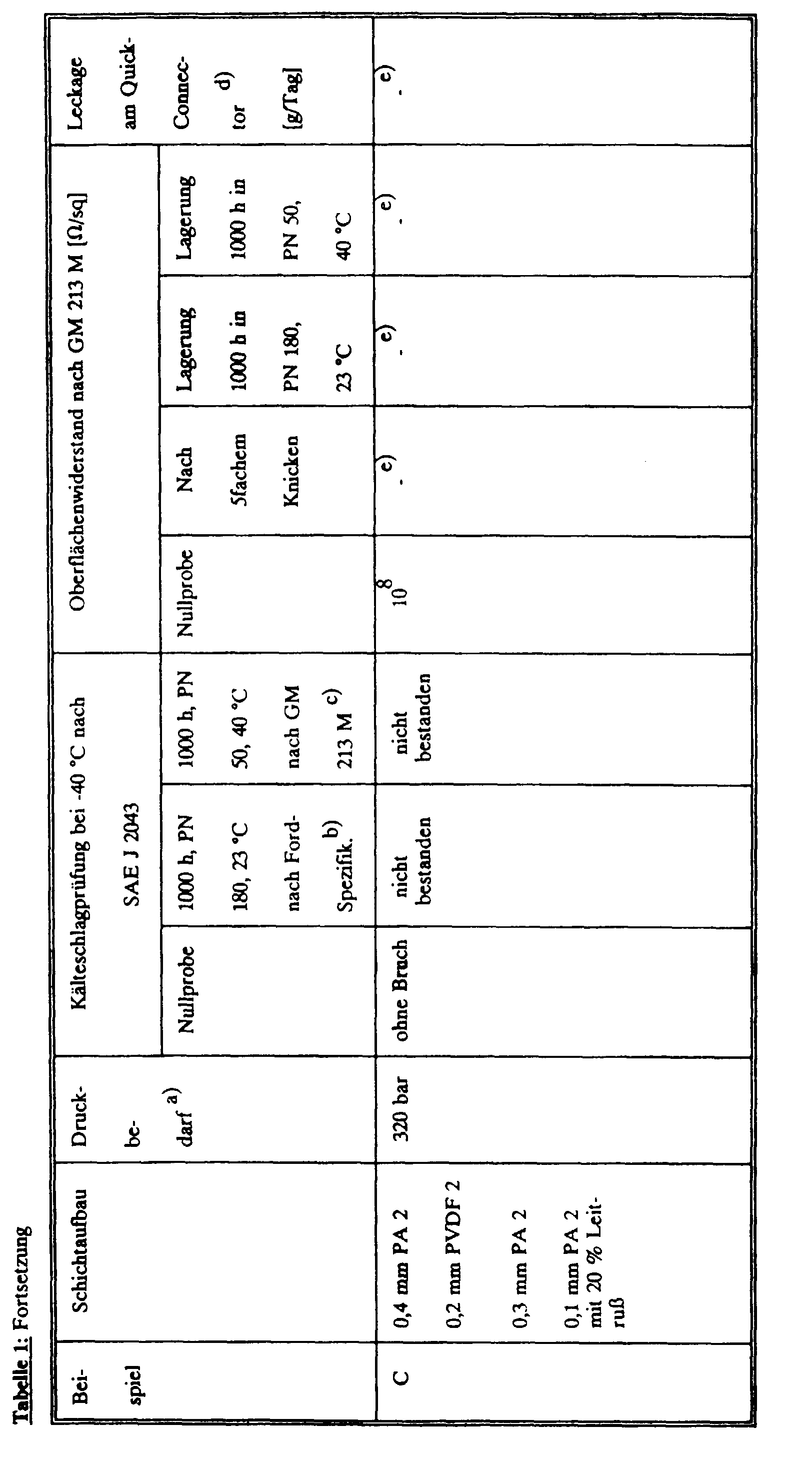

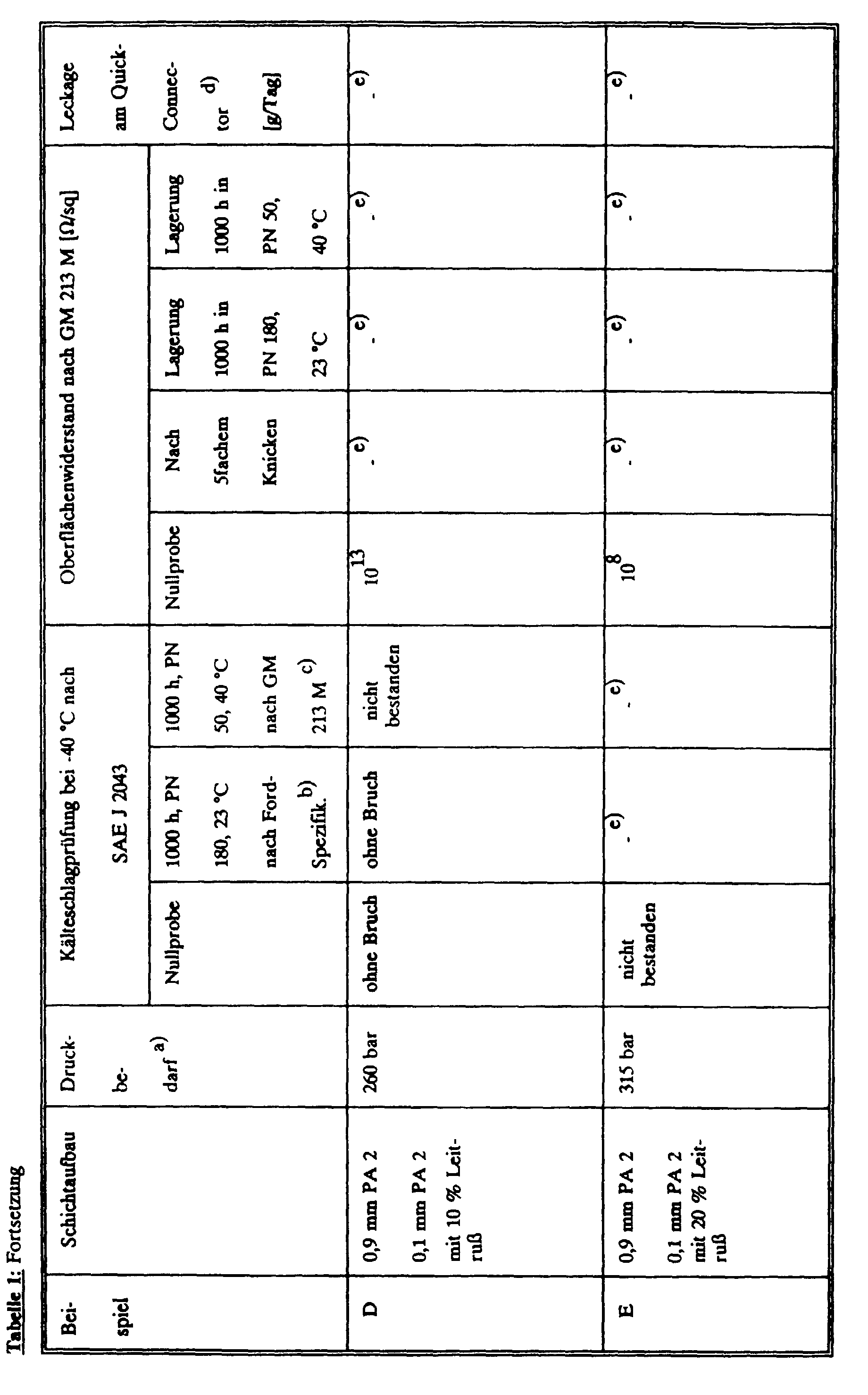

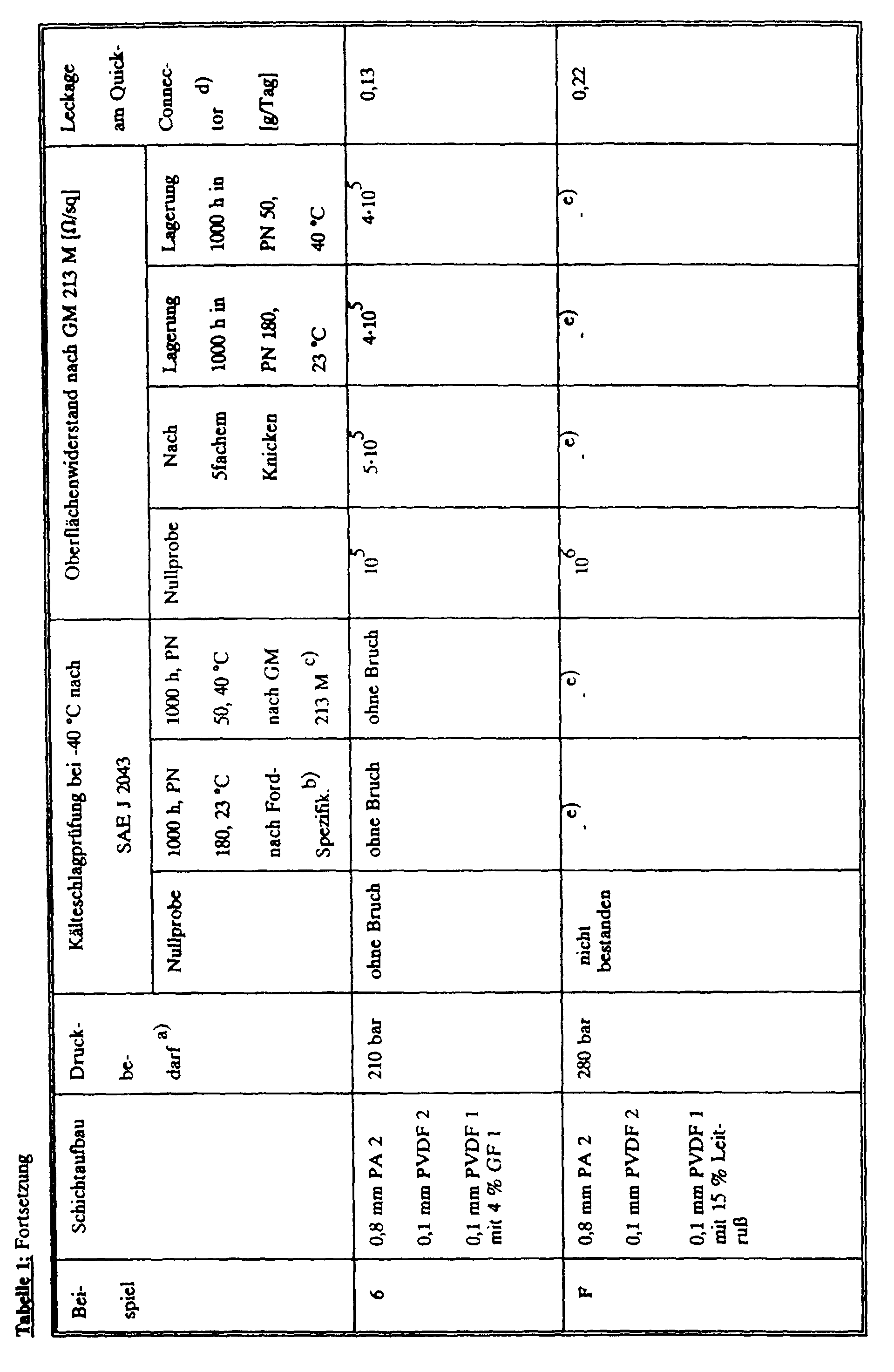

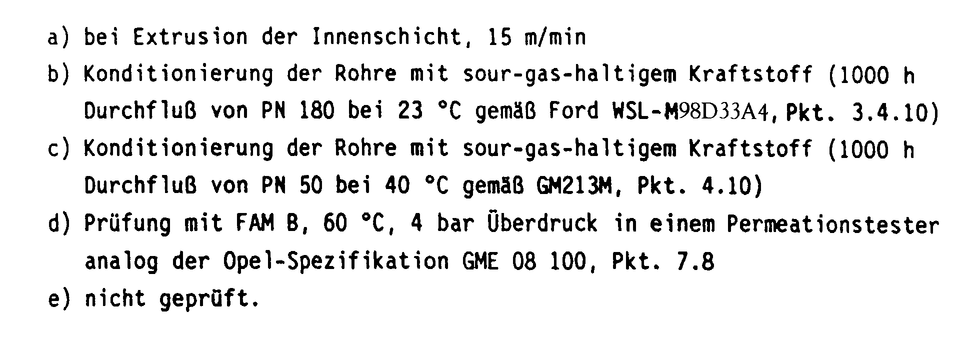

## Patentansprüche

1. Mehrschichtiges Kunststoffrohr, das folgende Schichten enthält:
I. Außenschicht bestehend aus einer thermoplastischen Formmasse und
II. Innenschicht bestehend aus einer elektrisch leitfähigen thermoplastischen Formmasse,
dadurch gekennzeichnet,
daß die elektrisch leitfähige Formmasse Graphit-Fibrillen enthält.

2. Kunststoffrohr gemäß Anspruch 1,
dadurch gekennzeichnet,
daß die Innenschicht 1 bis 30 Gew.-% Graphit-Fibrillen enthält.

3. Kunststoffrohr gemäß Anspruch 1,
dadurch gekennzeichnet,
daß die Innenschicht 1,5 bis 10 Gew.-% und bevorzugt 2 bis 7 Gew.-% Graphit-Fibrillen enthält.

4. Kunststoffrohr gemäß einem der vorhergehenden Ansprüche,
dadurch gekennzeichnet,
daß die Außenschicht aus einer Polyamid-Formmasse, einer Polyolefin-Formmasse oder einer Polyester- bzw. Polyesterelastomer-Formmasse besteht.

5. Kunststoffrohr gemäß einem der vorhergehenden Ansprüche,
dadurch gekennzeichnet,
daß die Innenschicht aus einer Polyamid-Formmasse, einer Polyolefin-Formmasse, einer Polyesterformmasse oder einer Fluorpolymer-Formmasse besteht.

6. Kunststoffrohr gemäß Anspruch 5,
dadurch gekennzeichnet,
daß das Fluorpolymer ein Ethylen-Tetrafluorethylen-Copolymeres (ETFE), ein Tetrafluorethylen-Hexafluorpropen-Vinylidenfluorid-Terpolymeres (THV), ein Ethylen-Chlortrifluorethylen-Copolymeres (ECTFE) oder ein Polyvinylidenfluorid (PVDF) ist.

7. Kunststoffrohr gemäß Anspruch 6,
dadurch gekennzeichnet,
daß das PVDF ein Homopolymeres oder ein Copolymeres von Vinylidenfluorid mit bis zu 40 Gew.-% anderer Monomerer ist.

8. Kunststoffrohr gemäß einem der vorhergehenden Ansprüche,
dadurch gekennzeichnet,
daß es zusätzlich eine Sperrschicht für Kraftstoffkomponenten als Zwischenschicht enthält.

9. Kunststoffrohr gemäß Anspruch 8,
dadurch gekennzeichnet,
daß die Sperrschicht aus einer Polyester-Formmasse, einer PVDF-Formmasse oder einer EVOH-Formmasse besteht.

10. Kunststoffrohr gemäß Anspruch 9,
dadurch gekennzeichnet,
daß als Polyester Polybutylenterephthalat verwendet wird.

11. Kunststoffrohr gemäß einem der vorhergehenden Ansprüche,
dadurch gekennzeichnet,
daß sich die Dicke der Innenschicht zur Dicke der Außenschicht bzw. zur Summe der Dicken der übrigen Schichten wie 1 : 5 bis 1 : 100 verhält.

12. Verwendung des Kunststoffrohrs gemäß einem der Ansprüche 1 bis 11 zum Transport (petro)chemischer Stoffe.

13. Verwendung des Kunststoffrohrs gemäß einem der Ansprüche 1 bis 11 im Kraftfahrzeugsektor zum Durchleiten von Brems-, Kühl- und Hydraulikflüssigkeiten sowie Kraftstoff.

14. Verwendung des Kunststoffrohrs gemäß einem der Ansprüche 1 bis 11 zur Herstellung von Hohlkörpern.

15. Verwendung des Kunststoffrohrs gemäß einem der Ansprüche 1 bis 11 zur Herstellung von Einfüllstutzen oder Tankbehältern im Kraftfahrzeugsektor.

16. Verwendung des Kunststoffrohrs gemäß einem der Ansprüche 1 bis 11 als Förderleitung für Feststoffe.

## Claims

1. A multilayer plastic pipe containing the following layers:
I. An outer layer comprising a thermoplastic moulding composition and
II. an inner layer comprising an electrically conductive thermoplastic moulding composition,
characterized in that the electrically conductive moulding composition contains graphite fibrils.

2. A plastic pipe according to claim 1, characterized in that the inner layer contains from 1 to 30% by weight of graphite fibrils.

3. A plastic pipe according to claim 1, characterized in that the inner layer contains from 1.5 to 10% by weight and preferably from 2 to 7% by weight of graphite fibrils.

4. A plastic pipe according to any of the preceding claims, characterized in that the outer layer comprises a polyamide moulding composition, a polyolefin moulding composition or a polyester moulding composition or a polyester elastomer moulding composition.

5. A plastic pipe according to any of the preceding claims, characterized in that the inner layer comprises a polyamide moulding composition, a polyolefin moulding composition, a polyester moulding composition or a fluoropolymer moulding composition.

6. A plastic pipe according to claim 5, characterized in that the fluoropolymer is an ethylene-tetrafluoroethylene copolymer (ETFE), a tetrafluoroethylene-hexafluoropropene-vinylidene fluoride terpolymer (THV), an ethylene-chlorotrifluoroethylene copolymer (ECTFE) or a polyvinylidene fluoride (PVDF).

7. A plastic pipe according to claim 6, characterized in that the PVDF is a homopolymer or a copolymer of vinylidene fluoride containing up to 40% by weight of other monomer.

8. A plastic pipe according to any of the preceding claims, characterized in that it additionally contains a barrier layer for fuel components as intermediate layer.

9. A plastic pipe according to claim 8, characterized in that the barrier layer comprises a polyester moulding composition, a PVDF moulding composition or an EVOH moulding composition.

10. A plastic pipe according to claim 9, characterized in that polybutylene terephthalate is used as polyester.

11. A plastic pipe according to any of the preceding claims, characterized in that the ratio of the thickness of the inner layer to the thickness of the outer layer or to the sum of the thicknesses of the other layers is from 1 : 5 to 1 : 100.

12. Use of the plastic pipe according to any one of claims 1 to 11 for the transport of (petro)chemical materials.

13. Use of the plastic pipe according to any one of claims 1 to 11 in the motor vehicle sector for conveying brake, cooling and hydraulic fluids and also fuel.

14. Use of the plastic pipe according to any one of claims 1 to 11 for producing hollow bodies.

15. Use of the plastic pipe according to any one of claims 1 to 11 for producing filling ports or tanks in the motor vehicle sector.

16. Use of the plastic pipe according to any one of claims 1 to 11 as transport pipe for solids.

## Revendications

1. Tube en matière synthétique à plusieurs couches, qui contient les couches suivantes :
I. Couche externe constituée d'une masse à mouler thermoplastique et
II. Couche interne constituée d'une masse à mouler thermoplastique électriquement conductrice,
caractérisé en ce que
la masse à mouler électriquement conductrice contient des fibrilles de graphite.

2. Tube en matière synthétique selon la revendication 1,
caractérisé en ce que
la couche interne contient de 1 à 30 % en poids de fibrilles de graphite.

3. Tube de matière plastique selon la revendication 1,
caractérisé en ce que
la couche interne contient de 1,5 à 10 % en poids et de préférence de 2 à 7 % en poids de fibrilles de graphite.

4. Tube en matière synthétique selon l'une des revendications précédentes,
caractérisé en ce que
la couche externe se compose d'une masse à mouler en polyamide, d'une masse à mouler en polyoléfine ou d'une masse à mouler en polyester ou en élastomère de polyester.

5. Tube de matière synthétique selon l'une des revendications précédentes,
caractérisé en ce que
la couche interne se compose d'une masse à mouler en polyamide, d'une masse à mouler en polyoléfine, d'une masse à mouler en polyester ou d'une masse à mouler en polymère fluoré.

6. Tube en matière synthétique selon la revendication 5,
caractérisé en ce que
le polymère fluoré est un copolymère éthylène-tétrafluoroéthylène (ETFE), un terpolymère tétrafluoroéthylène-hexafluoropropène-fluorure de vinylidène (THV), un copolymère éthylène-chlorotrifluoroéthylène (CTFE) ou un fluorure de polyvinylidène (PVDF).

7. Tube en matière synthétique selon la revendication 6,
caractérisé en ce que
le PVDF est un homopolymère ou un copolymère de fluorure de vinylidène avec jusqu'à 40 % en poids d'un autre monomère.

8. Tube en matière synthétique selon l'une des revendications précédentes,
caractérisé en ce qu'
il contient en outre une couche de barrage pour les composants carburants comme couche intermédiaire.

9. Tube en matière synthétique selon la revendication 8,
caractérisé en ce que
la couche de barrage se compose d'une masse à mouler en polyester, d'une masse à mouler en PVDF ou d'une masse à mouler en EVOH.

10. Tube en matière synthétique selon la revendication 9,
caractérisé en ce qu'
on utilise comme polyester le téréphtalate de polybutylène.

11. Tube en matière synthétique selon l'une des revendications précédentes,
caractérisé en ce que
l'épaisseur de la couche interne est par rapport à l'épaisseur de la couche externe ou à la somme des épaisseurs des autres couches dans une proportion de 1:5 à 1:100.

12. Utilisation du tube en matière synthétique selon l'une des revendications 1 à 11 pour le transport de matières (pétro)chimiques.

13. Utilisation du tube en matière synthétique selon l'une des revendications 1 à 11 dans le secteur des véhicules automobiles pour le passage des liquides de freinage, de refroidissement et hydrauliques, ainsi que du carburant.

14. Utilisation du tube en matière synthétique selon l'une des revendications 1 à 11 pour la fabrication de corps creux.

15. Utilisation du tube en matière synthétique selon l'une des revendications 1 à 11 pour la fabrication de tubulures de remplissage ou de récipients de cuves dans le secteur automobile.

16. Utilisation du tube en matière synthétique selon l'une des revendications 1 à 11 comme canalisation de transport pour solides.
